# EUROPEAN PATENT APPLICATION

(11) **EP 3 575 440 A1**
(43) Date of publication of application: **04.12.2019**
(21) Application number: 18745429.3
(22) Date of filing: 26.01.2018
(51) Int. Cl.: C25B 9/08, C25B 1/08, C25B 9/20, C25B 11/03, C25B 11/04

(54) **BIPOLAR ELEMENT, BIPOLAR ELECTROLYTIC CELL, AND HYDROGEN MANUFACTURING METHOD**

(30) Priority: 26.01.2017 JP 2017012546
(71) Applicant: ASAHI KASEI KABUSHIKI KAISHA, Tokyo 100-0006 (JP)
(72) Inventor: KOMURA Ryo, Tokyo 100-0006 (JP); UCHINO Yousuke, Tokyo 100-0006 (JP); HASEGAWA Shinji, Tokyo 100-0006 (JP)
(74) Representative: dompatent von Kreisler Selting Werner - Partnerschaft von Patent- und Rechtsanwälten mbB
(86) International application number: PCT/JP2018/002586
(87) International publication number: WO 2018/139613

(57) **Abstract**

An object of the present disclosure is to provide a bipolar element in which the possibility of a membrane contacting an anode and a cathode thereby forming a zero-gap structure to be flawed is reduced even after long-term use. A bipolar element of the present disclosure is a bipolar element comprising electrodes comprising a cathode and an anode, a partition wall separating the anode from the cathode, and an outer frame bordering the partition wall, wherein a clearance 'a' from an electrode to the partition wall is the longest in a center region of the electrode, and a difference of the clearances 'a' between the center region of the electrode and an edge of the electrode is 1.0 mm to 3.0 mm, in cross-section on a plane that is vertical to the partition wall and is vertical to a given direction along the partition wall.

## Description

### TECHNICAL FIELD

The present disclosure relates to a bipolar element, a bipolar electrolyzer comprising the same, and a hydrogen production method.

### BACKGROUND

In recent years, techniques utilizing renewable energy, such as wind power generation and photovoltaic power generation, have attracted attention in order to address the issues including global warming due to greenhouse gases such as carbon dioxide, decrease of fossil fuel reserves, and so on.

The nature of renewable energy is that it is subject to very large fluctuation as its output depends on climatic conditions. It is thus not always possible to transport electric power obtained by electricity generation by renewable energy to the general electric power system, and there is concern about social influences such as imbalance of electricity supply and demand, destabilization of electric power system, and so on.

Therefore, research is being conducted to convert the electric power generated from renewable energy into a form suitable for storage and transportation for utilization. Specifically, study has been made on how to generate storable and transportable hydrogen by electrolysis of water using electric power generated from renewable energy, and to use hydrogen as an energy source or material.

Hydrogen is widely used industrially in the fields of, for example, petroleum refining, chemical synthesis, and metal refining, and in recent years it can be used in many scenes such as in hydrogen stations for fuel cell vehicles (FCVs), smart communities, and hydrogen power plants. Accordingly, there is high expectation for the development of technology to obtain, in particular, hydrogen from renewable energy.

Methods for electrolysis of water include solid polymer electrolyte water electrolysis, high-temperature steam electrolysis, and alkaline water electrolysis. Of these, alkaline water electrolysis is regarded as one of the most promising because of its industrialization over decades, large-scale availability, and inexpensiveness as compared to other water electrolysis devices.

However, for adaptation of alkaline water electrolysis as a means for storing and transporting energy, it is necessary to make it possible to conduct water electrolysis efficiently and stably using electric power with large fluctuation in output as described above, and it is required to address various issues associated with electrolyzers and devices for alkaline water electrolysis.

Particularly, in order to address the issue of improving the electric power consumption rate for hydrogen production by suppressing the bath voltage in alkaline water electrolysis, it is known to be effective to use a structure in which the gap between the membrane and the electrodes is substantially eliminated, which is called a zero-gap structure, as the structure of the electrolyzer (see US4530743B [PTL 1] and JPS59-173281A [PTL 2]). With the zero-gap structure, by rapidly escaping the generated gas through the pores of an electrode to the side opposite to the membrane side of the electrode, it is possible to reduce the distance between the electrodes while minimizing gas accumulation near the electrodes, thereby keeping bath voltage low. The zero-gap structure is very effective in suppressing bath voltage and is adopted in various electrolysis devices.

### CITATION LIST

### Patent Literature

PTL 1: US4530743B
PTL 2: JPS59-173281A

### SUMMARY

### (Technical Problem)

For applications in which electricity is obtained from renewable energy, such as solar power and wind power by means of electrolysis of water, and is stored in the form of hydrogen to employ as an energy carrier, large-scale water electrolysis devices, as well as electrodes with large areas, are required. In addition, for improving the efficiency of facility, there is a strong demand for electrolysis conducted under high current density conditions or high voltage conditions.

In zero-gap structures described in PTLs 1 and 2 provided in large-scale electrolysis devices, however, membranes may be damaged during operations, and problems, including a reduced electrolysis performance and lower product purities, are inevitable. We carefully examined damages of membranes, and identified possible causes of the damages. A membrane might be damaged at the time when the membrane was interposed between a cathode and an anode and was pressed against them to form a zero-gap structure. Or a membrane might be damaged when it is caught in a gap between a surface of an outer frame facing a partition wall and an edge of an electrode during a long-term operation. Such damages tend to occur particularly during high current density operations. It was hypothesized that, electrolysis reactions per unit area increase in high current density operations, and overvoltage at electrode surfaces and the membrane generates more heat, resulting in increased temperatures of the electrodes and the membrane. As a result, stress due to thermal expansion is intensified and the mechanical characteristics of the membrane reduce due to thermal degradation over time, which is likely lead to distortion of the membrane, resulting in damages to the membrane.

An object of the present disclosure is to provide a bipolar element in which the possibility of a membrane contacting an anode and a cathode thereby forming a zero-gap structure to be flawed is reduced even after long-term use, and a reduction in the electrolysis efficiency (an increase in the electrolysis voltage) is suppressed.

### (Solution to Problem)

In other words, the present disclosure is as follows:
(1) A bipolar element comprising:
   electrodes comprising a cathode and an anode;
   a partition wall separating the anode from the cathode; and
   an outer frame bordering the partition wall,
   wherein a clearance 'a' from an electrode to the partition wall is the longest in a center region of the electrode, and a difference of the clearances 'a' between the center region of the electrode and an edge of the electrode is 1.0 mm to 6.0 mm, in cross-section on a plane that is vertical to the partition wall and is vertical to a given direction along the partition wall.

   This bipolar element is preferably a bipolar element for alkaline water electrolysis.
   The "electrode" in the recitation "a clearance 'a' from an electrode to the partition wall" and the "electrode" in the recitation "a difference of the clearances 'a' between the center region of the electrode and an edge of the electrode" may refer to at least one of the electrodes, i.e., at least one of the anode or the cathode.
(2) The bipolar element according to (1), wherein the electrode comprises two or more bent structures from the center region to the edge of the electrode in the cross-section, each bent structure having a center of curvature on a side of the partition wall.
(3) The bipolar element according to (2), further comprising a plurality of ribs that are provided between the electrode and the partition wall such that the ribs are arranged so as to be parallel to the given direction along the partition wall, the plurality of ribs comprising an end rib that is located the closest to the edge of the electrode,
   wherein a first bent structure of the bent structures is located at an intersection of a line vertical to the partition wall along the end rib and the electrode, and a second bent structure of the bent structures is located closer to the edge of the electrode than the intersection and is spaced apart from the edge by 15 mm or less, in the cross-section.
(4) The bipolar element according to (3), wherein a difference of the clearances 'a' between the center region of the electrode and a center of a bent region including the second bent structure is 1.0 mm to 4.0 mm.
(5) The bipolar element according to any one of (1) to (4), wherein a minimum clearance from the edge to the outer frame in a direction vertical to the given direction along the partition wall is 1 mm to 4 mm, in the cross-section.
(6) The bipolar element according to any one of (1) to (5), wherein the electrode comprises a substrate containing nickel and having a thickness of 0.5 mm to 2.0 mm.
(7) The bipolar element according to any one of (1) to (6), wherein the anode comprises the bent structures.
(8) The bipolar element according to any one of (1) to (7), wherein
   the cathode has a mesh structure,
   the bipolar element further comprises:
   an elastic body between the cathode and the partition wall; and
   a cathode current collector between the elastic body and the cathode,
   the cathode current collector comprising the ribs attached thereto.
(9) A bipolar electrolyzer comprising:
   a plurality of the bipolar elements according to any one of (1) to (8), overlapped one another having a membrane interposed therebetween.
   In the bipolar electrolyzer, water containing an alkali is contained in an anode compartment on a side of the anode and a cathode compartment on a side of the cathode, the anode compartment and the cathode compartment being defined by the partition wall, the outer frame, and the membrane.
(10) A hydrogen production method for producing hydrogen by electrolyzing water containing an alkali in an electrolyzer comprising a plurality of bipolar elements overlapped one another having a membrane interposed therebetween, wherein each bipolar element is a bipolar element comprising electrodes comprising a cathode and an anode, a partition wall separating the anode from the cathode, and an outer frame bordering the partition wall, a clearance 'a' from an electrode to the partition wall being the longest in a center region of the electrode, and a difference of the clearances 'a' between the center region of the electrode and an edge of the electrode being 1.0 mm to 6.0 mm, in cross-section on a plane that is vertical to the partition wall and is vertical to a given direction along the partition wall.

The bipolar element may be the bipolar element according to any one of (1) to (8), and the electrolyzer may be the bipolar electrolyzer according to (9).

### (Advantageous Effect)

In accordance with the present disclosure, a bipolar element is provided in which the possibility of a membrane contacting an anode and a cathode thereby forming a zero-gap structure to be flawed is reduced even after long-term use, and a reduction in the electrolysis efficiency (an increase in the electrolysis voltage) is suppressed.

### BRIEF DESCRIPTION OF THE DRAWINGS

In the accompanying drawings:
FIG. 1 is a side view generally illustrating an example of a bipolar electrolyzer according to the present embodiment;
FIG. 2 is a cross-sectional view of a zero-gap structure portion inside an electrolytic cell in a portion enclosed by broken line in FIG. 1 of the example of a bipolar electrolyzer according to the present embodiment;
FIG. 3 is a plan view illustrating an example of an inner header type bipolar element of the present embodiment;
FIG. 4A is a partial cross-sectional view of the bipolar element in FIG. 3 when being cut on a plane along Line A-A in FIG. 3;
FIG. 4B is a partial cross-sectional view of the bipolar element in FIG. 3 when being cut on a plane along Line B-B in FIG. 3;
FIG. 4C illustrates another example of a partial cross-section of the bipolar element in FIG. 3, when cut on the plane along Line A-A; and
FIG. 5 illustrates the outline of an electrolysis device used in Examples and Comparative Examples.

### DETAILED DESCRIPTION

The following provides a detailed description of an embodiment of this disclosure (hereinafter, referred to as the "present embodiment"). The present disclosure is, however, not limited to the embodiments disclosed herein, and various modifications can be made within the spirit and scope of the disclosure.

### [Bipolar electrolyzer]

A bipolar electrolyzer 50 of the present embodiment comprises bipolar elements 60 of the present embodiment. In the bipolar electrolyzer 50 of the present embodiment, the bipolar elements 60 are preferably stacked one another having a membrane 4 interposed therebetween.

In the bipolar electrolyzer 50 of the present embodiment, the possibility of the membrane 4 to be flawed is reduced even when the membranes 4 are pressed against electrodes 2 for long time. Additionally, the structures between the bipolar elements 60, such as zero-gap structures, are more likely to be maintained, and the possibility of an increase in the overvoltage is reduced.

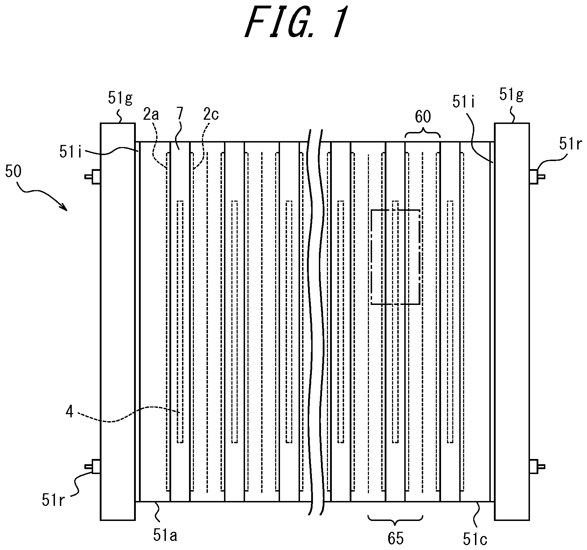

FIG. 1 is a side view generally illustrating an example of a bipolar electrolyzer 50 of the present embodiment.

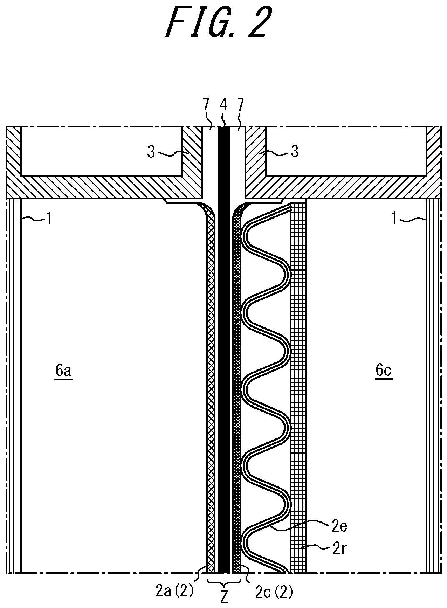

FIG. 2 illustrates a zero-gap structure (the part enclosed in the rectangle in the broken line in FIG. 1) in the example of the bipolar electrolyzer 50 of the present embodiment.

As illustrated in FIG. 1, a bipolar electrolyzer 50 according to the present embodiment is a bipolar electrolyzer comprising a plurality of bipolar elements 60 overlapped one another with a membrane 4 interposed therebetween, wherein each bipolar element 60 comprises an anode 2a, a cathode 2c, a partition wall 1 separating the anode 2a from the cathode 2c, and an outer frame 3 bordering the partition wall 1.

### [Bipolar element]

A bipolar element 60 of the present embodiment is a bipolar element comprising electrodes 2 comprising a cathode 2c and an anode 2a, a partition wall 1 separating the anode 2a from the cathode 2c, and an outer frame 3 bordering the partition wall 1.

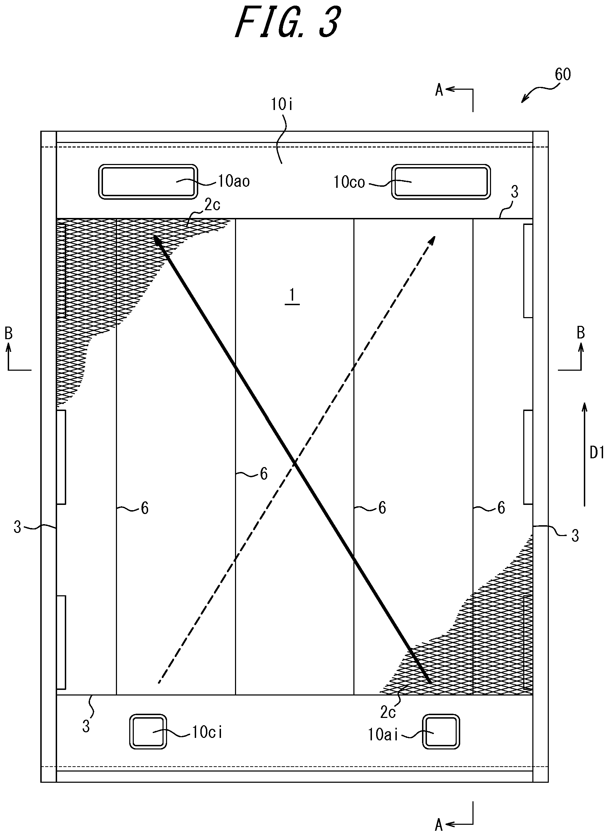

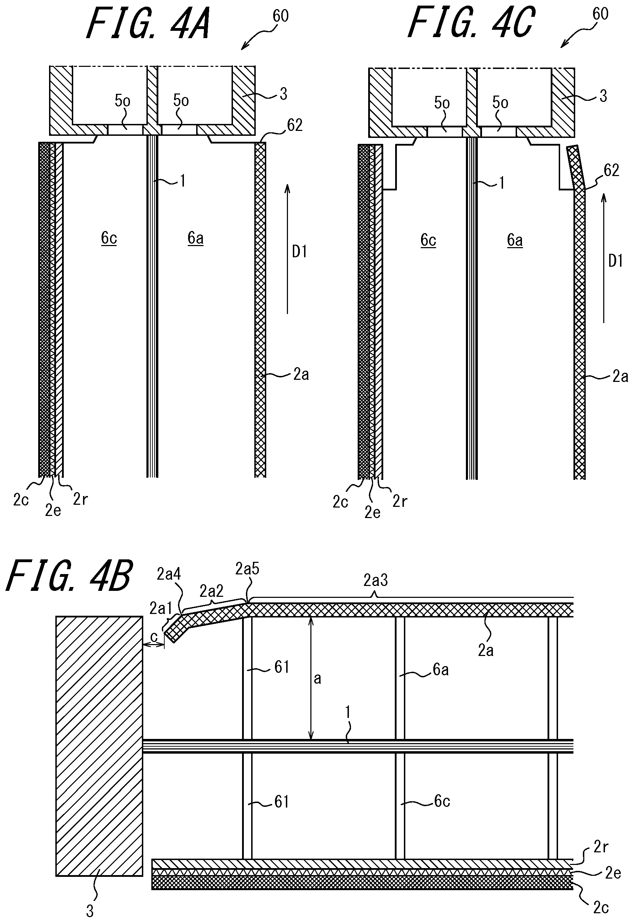

Here, a cross-section of the bipolar element in FIG. 3 when being cut on a plane along Line A-A in FIG. 3 is illustrated in FIG. 4A. In addition, a cross-section of the bipolar element in FIG. 3 when being cut on a plane along Line B-B in FIG. 3 is illustrated in FIG. 4B.

In the bipolar element 60 of the present embodiment, as illustrated in FIG. 4B, the clearance 'a' from an electrode 2 to the partition wall 1 is the longest in a center region of the electrode 2, and the difference of the clearances 'a' between the center region of the electrode and an edge of the electrode is 1.0 mm to 6.0 mm, in cross-section on a plane that is vertical to the partition wall 1 and is vertical to the given direction along the partition wall 1.

This reduces the possibility of the membrane 4 being pressed against the electrode 2 to be flawed in the zero-gap structure Z (described later) in which the anode 2a and the cathode 2c contact to each other having the membrane 4 interposed therebetween. Additionally, the zero-gap structure is more likely to be maintained, and the possibility of an increase in the overvoltage is reduced.

Such flaws tend to occur in a gap between a surface of the outer frame 3 facing the partition wall 1 and the edge of the electrode 2, for example, and are more likely to occur as the temperature of the electrolyte increases, particularly tend to occur during operations at temperatures of 90°C or higher.

The purity of hydrogen gas produced in electrolysis can be effectively improved by setting the pressure at the cathode 2c where hydrogen gas is generated to be higher than the pressure at the anode 2a. In this case, however, the membrane 4 is pressed against the anode 2a, and accordingly the possibility of flaws increases in the gap between the surface of the outer frame 3 facing the partition wall 1 and the edge of the anode 2a. The difference of the pressures is preferably more than 0 kPa and 5 kPa or less, and more preferably 1 kPa to 3 kPa.

The term "flaws" as used herein include creases, protrusions, and step of higher than 1 mm, which may shorten the lifetime of the membrane. The membrane may be caught in the gap between the surface of the outer frame facing the partition wall and the edge of the anode and/or the gap between the surface of the outer frame facing the partition wall and the edge of the cathode upon a formation of a zero-gap structure. The membrane caught in the gap is likely to be flawed in a location where the edge of the electrode contacts the membrane during long-term use.

In the example illustrated in FIG. 4B, in the anode 2a, the clearance 'a' from the electrode 2 to the partition wall 1 is the longest in the center region of the electrode 2, and the difference of the clearances 'a' between the center region of the electrode and an edge of the electrode is 1.0 mm to 6.0 mm, in cross-section on a plane that is vertical to the partition wall 1 and is vertical to the given direction along the partition wall 1. This is not limitative to the bipolar element 60 of the present embodiment. With regard to the cathode 2c or with regard to both the anode 2a and the cathode 2c, the clearance 'a' from the electrode 2 to the partition wall 1 may be the longest in the center region of the electrode 2, and the difference of the clearances 'a' between the center region of the electrode and an edge of the electrode may be 1.0 mm to 6.0 mm, in cross-section on a plane that is vertical to the partition wall 1 and is vertical to the given direction along the partition wall 1.

Additionally, the difference of the clearances 'a' in the center region of the electrode and the clearance 'a' at an edge of the electrode may be 1.0 mm to 6.0 mm on one edge of the electrode 2. Alternatively, the difference of the clearances 'a' in the center region of the electrode and the clearance 'a' at an edge of the electrode may be 1.0 mm to 6.0 mm, on the two edges of the electrode 2.

Here, the "cross-section on a plane that is vertical to the partition wall and is vertical to a given direction along the partition wall" in the bipolar element 60 in FIG. 3 refers to the cross-section B-B and a plane parallel to the cross-section B-B, for example. As used herein, the cross-section on a plane that is vertical to the partition wall 1 and is vertical to a given direction along the partition wall may also be referred to as the "transverse cross-section".

In addition, the "cross-section on a plane that is vertical to the partition wall and extends in a given direction along the partition wall" in the bipolar element 60 in FIG. 3 refers to the cross-section A-A and a plane parallel to the cross-section A-A, for example. As used herein, the cross-section on a plane that is vertical to the partition wall and extends in a given direction along the partition wall may also be referred to as the "length cross-section".

The bipolar element 60 of the present embodiment may be used such that the given direction along the partition wall 1 extends in the electrolyte passage direction or the electrolyte passage direction extends in the orthogonal direction.

The bipolar element 60 of the present embodiment that can be used in an electrolyzer for alkaline water electrolysis (particularly a bipolar electrolyzer for alkaline water electrolysis) comprises a partition wall 1 separating the anode 2a from the cathode 2c, and an outer frame 3 bordering the partition wall 1, as illustrated in FIGS. 3, 4A, and 4B. More specifically, the partition wall 1 is conductive, and the outer frame 3 is provided surrounding the partition wall 1 along the outer circumference of the partition wall 1.

The bipolar element 60 of the present embodiment may be provided with ribs 6 for the purpose of supporting the electrodes 2, for example. Here, the ribs 6 may be provided in a given direction along the partition wall (FIG. 3). In the example in FIG. 3, the ribs 6 are provided in the direction extending from the side where inlet headers are provided, to the side where outlet headers are provided, and are provided spaced apart from each other in the cross-section B-B (the transverse cross-section in FIG. 4B). Particularly, the ribs on the two ends in the transverse cross-section are referred to as "end ribs 61".

In the bipolar element 60 of the present embodiment, the clearance 'a' from the cathode 2c or the anode 2a to the partition wall 1 is the longest in the center region of the cathode 2c or the anode 2a, in the cross-section (for example, the cross-section B-B in FIG. 3) on a plane that is vertical to the partition wall 1 and is vertical to a given direction along the partition wall 1. This reduces the possibility of the membrane 4 to be flawed upon a formation of a zero-gap structure Z.

In this specification, it is assumed that the condition in that "clearance 'a' is the longest in the center region of the cathode 2c or the anode 2a" is met when the longest clearance 'a' is present in the center region. Particularly preferably, the clearance 'a' is constant and is the longest in the entire center region.

As used therein, the term "center region of the electrode" may refer to a region within 30% of the entire length of the electrode in the transverse cross-section or may be within 10% of the entire length of the electrode in the transverse cross-section relative to the center of the two ends of the electrode in the transverse cross-section, or may be the center with respect to the two ends of the electrode. The term "entire length of the electrode in the transverse cross-section" refers to the length of the electrode along the surface thereof spanning across the two ends thereof in the transverse cross-section.

The percentage of distance between the end ribs 61, relative to the length of the electrode across the two ends of the electrode in the width direction (the entire length of the electrode in the transverse cross-section) may be 70% or more and 99% or less.

In addition, the term "clearance 'a'" may refer to the length of the perpendicular line drawn from a point on the surface of the electrode 2 facing the partition wall to the surface of the partition wall 1 in the transverse cross-section and in the length cross-section (FIG. 4B).

The partition wall 1 may be used such that the given direction along the partition wall 1 extends in the vertical direction, and specifically, when the partition wall 1 is rectangular in plan view as illustrated in FIGS. 2 and 3, the given direction along the partition wall 1 extends in the same direction as the direction in which one pair of sides of two pairs of sides facing each other of the partition wall extend. In the present specification, this vertical direction is also referred to as the "electrolyte passage direction". In the example in FIG. 3, the "given direction along the partition wall" refers to the direction extending from the side of the electrode where inlet headers are provided, to the side where outlet headers are provided.

In the present embodiment (for example, any of (1) to (10) above), the electrode preferably comprises a bent structure from the center region to the edge of the electrode, the bent structure having a center of curvature on a side of the partition wall, in the transverse cross-section. The electrode may have one bent structure or two or more bent structures, yet two or more bent structures are preferred from the perspective of further reducing the possibility of the membrane to be flawed. Particularly preferably, a first bent structure 2a5 is provided at the intersection of a line vertical to the partition wall 1 along the end rib 61 and the electrode 2, and a second bent structure 2a4 is provided closer to the edge of the electrode than the intersection and within 15 mm from the edge, in the transverse cross-section.

When the electrode 2 is overlapped together with an elastic body 2e and a current collector 2r, for example, only the current collector 2r may be provided with the bent structures, such that the electrode 2, the elastic body 2e, and the current collector 2r have the bent structures as unified structure.

In this specification, the bent structures include flexions.

In the present embodiment (for example, any of (1) to (10) above), examples of the bent structures includes a bent structure of which center of curvature is located on the partition wall side, and of which radius of curvature is more than 0 mm (preferably 0.5 mm or more, and more preferably 1.0 mm or more and 10 mm or less); and a flexion structure flexing toward the partition wall, such as a flexion structure flexing at an outer angle of 90° or more and less than 180° (preferably, at an angle of 120° or more and 179° or less), for example. Here, the outer angle refers to the larger one of the angles defined by the two crossing lines extending from the surface of the flexion structure.

Here, the "bent region" may refer to a region provided with continuous bent structure(s) that has the same radius of curvature and/or different radii of curvature. The "radius of curvature" of such a bent region is defined as the average of radii of curvature of all of the bent regions.

In the present embodiment (for example, any of (1) to (10) above), in the bipolar element 60, the difference of the clearances 'a' between the center region of the electrode 2 and the edge of the electrode 2 is 1.0 mm to 6.0 mm, preferably 2.0 mm to 3.0 mm, in the transverse cross-section. This reduces the possibility of the membrane 4 to be flawed. A difference of smaller than 1.0 mm is undesirable because the membrane may be caught in the gap between the edge of the electrode 2 and the outer frame 3 and the membrane may deform significantly, which increases the possibility of the membrane to be flawed. On the other hand, a difference of more than 6.0 mm is also undesirable because the inter-electrode distance between the edge portion of the electrode 2 and the counterpart electrode opposing to the edge portion is increased, which may reduce the electrolysis efficiency.

In the present embodiment (for example, any of (1) to (10) above), in the bipolar element 60, the difference of the clearances 'a' between the center region of the electrode 2, and the point where the clearance from the electrode 2 to the outer frame 3 in the direction vertical to the given direction along the partition wall 1 is the longest is preferably 2.0 mm to 6.0 mm, and more preferably 2.0 mm to 3.0 mm, in the transverse cross-section.

In the present embodiment (for example, any of (1) to (10) above), the second bent structure 2a4 is preferably spaced apart from the edge of the electrode 2 by 1.0 mm to 15.0 mm, in the transverse cross-section.

In the present embodiment (for example, any of (1) to (10) above), the bipolar element 60 preferably includes at least a second bent structure 2a4 described above, and the difference of the clearances 'a' between the center region of the electrode 2 and the center of a bent region including the second bent structure 2a4 is preferably 1.0 mm to 4.0 mm and more preferably 1.5 mm to 2.5 mm.

In the present embodiment (for example, any of (1) to (10) above), in the bipolar element 60, from the perspective of even further reducing the possibility of the membrane 4 to be flawed upon a formation of a zero-gap structure Z, the bent structure provided the closest to the center region is preferably a bent structure of which center of curvature is located on the partition wall side, and of which radius of curvature is 0.5 mm or more; or a flexion structure flexing toward the partition wall at an outer angle of 90° or more and less than 180°, in the transverse cross-section. Here, the outer angle is defined as the larger one of the angles defined by the two crossing lines extending from the surface of the flexion structure.

In addition, the bent structure that is provided closest to the center region is preferably the first bent structure 2a5.

In the present embodiment (for example, any of (1) to (10) above), the bent structure may be provided over the entire length or a part of the entire length of a pair of sides facing each other in the direction vertical to the given direction along the partition wall. Specifically, the bent structure may be provided over 95% to 100% of the entire length of a pair of sides facing each other in the direction vertical to the given direction along the partition wall. When a plurality of bent structures are provided, each bent structure may be provided to the equivalent or different locations on a pair of sides facing each other in the direction vertical to the given direction along the partition wall.

In the present embodiment (for example, any of (1) to (10) above), the bipolar element 60 preferably includes a bent region including the edge of the electrode 2, and more preferably includes a bent region including the edge of the electrode 2 and a bent region including the intersection of the end the rib 6 and the electrode 2.

In addition, in the present embodiment (for example, any of (1) to (10) above), in the bipolar element 60, a region where bent structures are continuous may be provided in a region from the edge of the electrode 2, up to 3% of the entire length of the electrode 2 in the length where it extends, and each bent structure has a center of curvature located on the partition wall 1 side, and a radius of curvature of 0.5 mm or more, in the transverse cross-section. Or, a region where bent structures are continuous may be provided in a region from the edge of the electrode 2 to the end rib 61, and each bent structure has a center of curvature located on the partition wall 1 side, and has a radius of curvature is 0.5 mm or more, in the transverse cross-section. The region where bent structures are continuous may have the same radius of curvature or different radii of curvature, or may have a radius of curvature gradually decreasing toward the edge of the electrode 2.

In addition, in the present embodiment (for example, any of (1) to (10) above), in the bipolar element 60, a plurality of regions where bent structures are continuous may be provided from the center region to the edge of the electrode 2, each bent structure has a center of curvature located on the partition wall 1 side, and a radius of curvature of 0.5 mm or more. The region between adjacent regions may be a flat region; a region of a bent structure of which center of curvature is located on the partition wall 1 side, and of which radius of curvature is less than 0.5 mm; a region of a bent structure of which center of curvature is located on the side opposite to partition wall 1; or any combination thereof.

In the present embodiment (for example, any of (1) to (10) above), in the bipolar element 60, the anode 2a preferably has the bent structure, and the anode 2a may have the bent structure and the cathode 2c may have no bent structure.

In the present embodiment (for example, any of (1) to (10) above), the electrode 2 including the bent structure preferably has a flat surface between the two end ribs 61 in the transverse cross-section, from the perspective of facilitating formation of the zero-gap structure Z.

In the present embodiment (for example, any of (1) to (10) above), the transverse cross-sectional profile of the electrode 2 including the bent structure preferably has a profile that prevents the membrane 4 from being caught in the gap between the surface of the outer frame 3 facing the partition wall 1 and the edge of the electrode 2 in a zero-gap structure. Example includes: profile in which the clearance 'a' gradually decreases from the center region to the edge (e.g., a profile in which the clearance 'a' is constant from a center to the intersection with the end rib, and the clearance 'a' gradually decreases from the intersection with the end rib toward the edge; and a profile in which the clearance 'a' is constant from the center region to an arbitrary point between the edge and the end rib, and the clearance 'a' gradually decreases from the arbitrary point toward the edge); profile having a bent structure of which center of curvature is located on the side opposite to the partition wall (e.g., a combination of a bent structure of which center of curvature is located on the partition wall side, and a bent structure of which center of curvature is located on the side opposite to the partition wall); a profile having the first bent structure and/or the second bent structure; profiles having a flexion structure flexing toward the partition wall (e.g., a profile having one flexion structure flexing toward the partition wall and a flat surface between the flexion structure and the edge of the electrode; and a profile having a plurality of flexion structures flexing toward the partition wall and flat surfaces between adjacent flexion structures and between the flexion structure and the edge of the electrode); profiles having a flexion structure flexing toward the side opposite to the partition wall; profiles where the edge of the electrode has the minimum clearance from the electrode to the outer frame in the direction vertical to a given direction along the partition wall; and any combinations thereof.

In the present embodiment (for example, any of (1) to (10) above), in the bipolar element 60, the minimum clearance 'c' (FIG. 4B) from the edge of the electrode 2 including the bent structure to the outer frame 3 (for example, the inner surface of the outer frame) in the direction vertical to the given direction along the partition wall 1 is preferably 1 mm to 4 mm, and more preferably 1.5 mm to 3.5 mm, in the transverse cross-section. If the minimum clearance 'c' is smaller than the above-described range, a disadvantage may be induced. For example, the electrode may deform due to the stress, for example, and may come in contact with the outer frame when the anode and the cathode are pressed against to each other interposing the membrane therebetween to form a zero-gap structure Z. In contrast, if the minimum clearance 'c' is greater than the above-described range, the area of the electrode is reduced and accordingly the ratio of the electrode area with respect to the area of the outer frame consisting of the inner dimension of the outer frame 3, i.e., the efficiency of the electrolysis dimension, is reduced, which is also undesirable.

In the present embodiment (for example, any of (1) to (10) above), in the bipolar element 60, the outer frame 3 is provided on the edge of the partition wall 1 in the transverse cross-section. Particularly in the case of a large-area electrolysis cell, strains tend to concentrate on the edges of the electrodes due to fabrication errors. As a result, in a zero-gap structure, the edges may excessively bend upward or downward as the temperature of the electrolyte increases during electrolysis. Some countermeasures to suppress bending of the electrode edges can be taken, such as provision of a member for suppressing the bending to the outer frame. Example of such countermeasures include fixation of parts of edges of the electrode with welding or screws, or provision of a stop plate on the outer frame, thereby suppressing deformation of the edges of the electrode.

In the present embodiment (for example, any of (1) to (10) above), the bipolar element 60 may have a bent structure (FIG. 4C) or may not have a bent structure (FIG. 4A) in cross-section (the cross-section A-A in FIG. 3, the length cross-section) on a plane that is vertical to the partition wall 1 and extends in a given direction along the partition wall 1.

When the bipolar element 60 of the present embodiment is provided with the ribs 6 (FIG. 3), the point of the electrode 2 closest to the edge thereof at which at electrode 2 is in contact with a rib 6 in the length cross-section is referred to as the "rib end 62" (FIGS. 4A and 4C). The rib end 62 may be the end of the electrode 2 (FIG. 4A), or may not be the end the electrode 2 (FIG. 4C).

The bipolar element 60 of the present embodiment may have a bent structure of which center of curvature is located at the rib end 62 on the partition wall side, or may have a bent structure of which center of curvature is located at an arbitrary point closer to the end of the electrode 2 than the rib end 62.

In addition, preferably, the region between the two rib ends 62 is flat and the clearance 'a' is the longest, in the length cross-section.

The percentage of the length of the region between the two rib ends 62 relative to the entire length of the electrode 2 between the ends thereof may be 70% or more and 99% or less, in the length cross-section.

The bent structure in the length cross-section is preferably provided over, but may be provided at a part of, the entire length of a pair of sides facing each other in a given direction along the partition wall 1. In addition, a bent structure in the length cross-section may be provided at one end or at each of the two ends of the electrode.

The bipolar element may have a bent structure in the length cross-section but may have no bent structure in the transverse cross-section.

In the bipolar element 60 of the present embodiment, it is preferable that the cathode 2c has a mesh structure, an elastic body 2e is interposed between the cathode 2c and the partition wall 1, a cathode current collector 2r is provided between the elastic body 2e and the cathode 2c, and the ribs 6 are attached to the cathode current collector 2r, from perspective of the effectiveness in a zero-gap structure Z.

Even if an electrode 2 for the bipolar element 60 of the present embodiment is fabricated without a first bent structure 2a5 in the intersection of a line vertical to the partition wall 1 along the end rib 61 and the electrode 2, a first bent structure 2a5 may be provided after the electrodes 2 are stacked interposing the membrane 4 therebetween to form a zero-gap structure Z.

For components in the bipolar element of the present embodiment and a bipolar electrolyzer including bipolar elements of the present embodiment, well-known techniques may be used, including the technique disclosed in Proceedings of the Symposium on Industrial Water Electrolysis, S. Srinivasan, et al., eds., Electrochemical Society, Princeton (1978), for example.

In the following, preferred embodiments for enhancing the effect of the present disclosure are described in detail.

The bipolar element of the present embodiment are provided with a plurality of ribs 6 arranged so as to be parallel to a given direction along the partition wall 1, as illustrated in FIGS. 3 and 4.

The provision of the ribs can reduce convections in the electrolysis compartment caused by disturbances of flows of gases and liquid, thereby suppressing local temperature elevations of the electrolyte.

### - Electrode -

In order to efficiently remove gas generated by electrolysis from the surface of the electrode, for example, a substrate for an electrode is preferably a porous body. In particular, in the case of a zero-gap electrolyzer, since it is necessary to remove the gas evolved from the back side of a surface of an electrode in contact with the membrane, it is preferable that the surface of the electrode in contact with the membrane and the opposite surface penetrate each other.

Examples of the porous body include a plain weave mesh, punching metal, expanded metal, metal foam, and the like.

Although the electrode may be a bare substrate or a substrate having a catalyst layer with a high reaction activity on its surface, the latter is preferred.

The material of the substrate is not particularly limited, yet mild steel, stainless steel, nickel, and a nickel-based alloy are preferable because of the resistance to the operating environment. Each of the anode and the cathode preferably comprises a substrate containing nickel.

The thickness of the substrate is preferably 0.5 mm or more and 2.0 mm or less, and more preferably 1.0 mm or more and 1.5 mm or less. In bipolar element of the present embodiment, the cathode and/or the anode preferably comprise a substrate containing nickel, and having a thickness of 0.5 mm to 2.0 mm.

Examples of the method of forming the catalyst layer on the substrate include: a thermal spraying method such as plating or plasma spraying; a thermal decomposition method including applying heat to a precursor layer solution applied onto a substrate; a method including mixing a catalyst substance with a binder component and immobilizing it on a substrate; and a vacuum film-forming method such as a sputtering method.

The specific surface area of the electrodes is preferably 0.001 m²/g or more and 1 m²/g or less, and more preferably, 0.005 m²/g or more and 0.1 m²/g or less. If the specific surface area of the electrode (the specific surface area of the whole electrode including the substrate) is small, the reactive active sites per unit area are reduced and low overvoltage properties may not be obtained. On the other hand, if the specific surface area of the electrodes for water electrolysis is excessively large, the mechanical strength of the catalyst layer decreases and the durability may decrease.

The specific surface area can be measured by, for example, the BET method. A measurement sample is placed in a dedicated cell and subjected to pretreatment through vacuum evacuation by heating to remove adsorbates on pore surfaces in advance. Then, the adsorption/desorption isotherm of gas adsorption to the measurement sample is measured at -196°C. The specific surface area of the measurement sample can be obtained from analysis of the obtained adsorption/desorption isotherm by the BET method.

### - Rib -

In the bipolar element 60 of the present embodiment, preferably, ribs 6 (anode flow ribs 6a and/or cathode ribs 6c) are provided to the partition wall 1, and the ribs 6 are in physical contacts with the respective electrodes 2.

Here, an electrode 2 may be disposed to ribs 6, or a current collector 2r, a conductive elastic body 2e, and an electrode 2 may be disposed to ribs 6, in this order.

The bipolar element 60 of an example in FIGS. 3 and 4 adopts a structure such that the cathode rib, the cathode current collector, the conductive elastic body, and the cathode are stacked in the stated order in the cathode compartment, and the anode rib and the anode are stacked in the stated order in the anode compartment.

It is to be noted that a cathode compartment adopts a structure of "cathode rib - current collector - conductive elastic body - cathode" and an anode compartment adopts a structure of "anode rib - anode" in the bipolar element 60 of an example in FIG. 2. The present disclosure is not limited to the above-described structures, and the anode compartment may also have a structure of "anode rib - anode current collector - conductive elastic body - anode".

Specifically, in the present embodiment, as illustrated in FIG. 2, ribs 6 (anode rib 6a and cathode rib 6c) are preferably attached to a partition wall 1.

In the bipolar element of the present embodiment, preferably at least a part of the ribs is conductive, and further preferably the entire ribs are conductive.

Any materials resistant to electrolysis may be used for the ribs, yet conductive metals are preferably used. For example, nickel-plated mild steel, stainless steel, or nickel may be used. It is particularly preferable that the material of the ribs is the same as that of the partition walls. A most preferred material of the ribs is nickel.

The length of each rib (anode rib or cathode rib) may be determined as appropriate according to the dimension of the electrode compartment and the electrode, and may be 0.7 to 1.0 times, is preferably 0.8 to 1.0 times, of the length of the electrode compartment in a given direction along the partition wall.

The height of the ribs may be determined as appropriate according to the distance from the partition wall to each flange, the thickness of a gasket, and the thickness of the electrode (the anode or the cathode), and the distance between the anode and the cathode, for example.

Of these ribs, end ribs 61 are preferably spaced apart by 25 mm to 75 mm from the edge of the electrode in the transverse cross-section, for more effective prevention of bending of ends of the electrode. The end ribs 61 may be spaced apart by the same or difference distances from the respective ends of the electrode in the transverse cross-section.

The height of the ribs may be determined as appropriate according to the distance from the partition wall to each flange, the thickness of a gasket, and the thickness of the electrode (the anode or the cathode), and the distance between the anode and the cathode, for example.

The thickness of each rib may range from 0.5 mm to 5 mm for the reasons of the cost, easiness of fabrication, and the strength, for example, and ribs with a thickness of 1 mm to 2 mm are, but not limited to, usable.

In the bipolar element of the present embodiment, if the partition wall is substantially rectangular in plan view, ribs having length of one pair of sides of two pairs of sides facing each other may be arranged in the direction in which the one pair of sides extend, such that the ribs are spaced apart from each other in the direction orthogonal to the one pair of sides. In the example in FIGS. 4A-C, the "direction in which the one pair of sides extend" is the A-A direction, and the "direction orthogonal to the one pair of sides" is the B-B direction, in FIG. 3.

### - Partition wall -

The shape of the partition wall 1 may be a planar shape having a predetermined thickness, yet is not particularly limited.

The shape of each partition wall in a plan view is not particularly limited, and it may be a rectangular shape (such as a square or a rectangle) or a circular shape (such as a circle or an ellipse), where a rectangular shape may have a rounded corner.

In one embodiment, the partition wall and the outer frame are joined together by welding or any other technique, for example, and a flange protruding to the direction perpendicular to the plane of the partition wall (an anode flange protruding toward the anode or a cathode flange protruding toward the cathode) is provided on the partition wall and the flange may be a part of the outer frame.

The partition wall may be used such that the given direction along the partition wall extends in the electrolyte passage direction.

From the viewpoint of achieving uniform supply of electric power, each partition wall is preferably made of a material having high conductivity, and from the perspectives of alkali resistance and heat resistance, preferred materials include nickel, nickel alloy, mild steel, and nickel alloy plated with nickel.

### - Outer frame -

Although the shape of the outer frame 3 is not particularly limited as long as it can border the corresponding partition walls 1, the outer frame 3 may have an inner surface extending over the periphery of the partition wall 1 along the direction perpendicular to the plane of the partition wall 1.

The shape of the outer frame is not particularly limited, and may be appropriately determined according to the shape of the partition walls in plan view.

The size of the outer frame is not particularly limited, and it may be designed according to the external dimensions of the electrode compartment.

In one embodiment, the partition wall and the outer frame are joined together by welding or any other technique, for example, and a flange protruding to the direction perpendicular to the plane of the partition wall (an anode flange protruding toward the anode or a cathode flange protruding toward the anode the cathode) is provided on the partition wall and the flange may be a part of the outer frame.

The respective lengths of the anode flange and the cathode flange in this case, may be, but are not limited to, 5 mm to 20 mm, and is preferably 7.5 mm to 15 mm.

As a material of each outer frame, a material having conductivity is preferable, and from the perspectives of alkali resistance and heat resistance, the following materials are preferred: nickel, nickel alloy, mild steel, and nickel alloy plated with nickel.

### [Bipolar electrolyzer]

Further, in the bipolar electrolyzer 50 of the present embodiment, a membrane 4 is in contact with an anode 2a and a cathode 2c to form a zero-gap structure Z (FIG. 2).

Although the partition wall 1 is not in contact with the anode 2a and the cathode 2c in the schematic diagram of FIG. 2, partition walls 1 are preferably in physical contact with the anode 2a and the cathode 2c.

Furthermore, in the bipolar electrolyzer 50 in the present embodiments, a partition wall 1, an outer frame 3, and a membrane 4 define an electrode compartment that allows passage of an electrolyte, and a plurality of ribs 6 are provided so as to be parallel to a given direction along the partition wall 1 in the electrode compartments (see FIGS. 2, 3 and 4A-C).

A bipolar type is one of methods to connect a number of bipolar elements to a power source, in which a plurality of bipolar elements 60 each having an anode 2a on one side and a cathode 2c on the other side, are arranged and are connected in series, and only the anode 2a and the cathode 2c at the two ends are connected to a power source.

The bipolar electrolyzer is advantageous in that the current from the power source can be reduced, and therefore a large quantity of compounds or certain materials can be produced in shorter time in electrolysis. Bipolar electrolyzers are more preferred than monopolar types for industrial applications because constant-current and high-voltage power source facilities are less expensive and smaller for the same outputs.

In the present embodiment, as illustrated in FIG. 1, the bipolar electrolyzer 50 is constructed by stacking the required number of bipolar elements 60.

In the example illustrated in FIG. 1, in the bipolar electrolyzer 50, a fast head 51g, an insulating plate 51i, and an anode terminal element 51a are arranged in order from one end, and an anode-side gasket part, a membrane 4, a cathode side gasket part, and a bipolar element 60 are arranged side by side in this order. In this case, each bipolar element 60 is arranged such that the cathode 2c faces toward the anode terminal element 51a side. Components from anode-side gasket portions up to bipolar elements 60 are repeatedly arranged as many times as required for the designed production quantity. After the required number of components from anode gaskets up to bipolar elements 60 are repeatedly arranged, an anode-side gasket portion, a membrane 4, and a cathode-side gasket portion are arranged again, and finally a cathode terminal element 51c, an insulating plate 51i, and a loose head 51g are arranged in this order. All of these components are tightened together with a tie rod 51r to provide a bipolar electrolyzer 50.

The arrangement of the bipolar electrolyzer can be arbitrarily selected from either the anode side or the cathode side and is not limited to the above order.

As illustrated in FIG. 1, in the bipolar electrolyzer 50, the bipolar elements 60 are disposed between the anode terminal element 51a and the cathode terminal element 51c. Respective membranes 4 are interposed between the anode terminal element 51a and the bipolar element 60, between two adjacent bipolar elements 60, and between the bipolar element 60 and the cathode terminal element 51c.

In the bipolar electrolyzer 50 of the present embodiment, as illustrated in FIG. 2, the membrane 4 is in contact with the anode 2a and the cathode 2c so as to form a zero-gap structure Z.

In alkaline water electrolysis, when there is a gap between a membrane 4 and an anode 2a and/or a cathode 2c, a large amount of bubbles generated by electrolysis accumulate in the gap along with the electrolyte, leading to a significant increase in electric resistance. In order to greatly reduce the electrolytic voltage in each electrolyzer, it is effective to minimize the distance between the anode and the cathode (hereinafter also referred to as the "inter-electrode distance") to eliminate the influence of the electrolyte and bubbles present between the anode and the cathode.

Therefore, the "zero-gap structure" is adopted, which is a structure that can maintain a state in which the anode and the membrane are in contact with each other, and so are the cathode and the membrane, over the entire surfaces of the electrodes, or a state in which the distance between the electrodes is substantially the same as the thickness of the membrane such that there is almost no gap between the anode and the membrane and between the cathode and the membrane, over the entire surfaces of the electrodes.

Several means for reducing inter-electrode distance have been proposed, and examples include one comprising flattening an anode and a cathode completely, and pressing them against each other having a membrane sandwiched therebetween; one comprising disposing an elastic body 2e (particularly, conductive elastic body), such as a spring, between an electrode and a partition wall, thereby supporting the electrode with the elastic body 2e; and one comprising disposing an elastic body 2e (particularly, conductive elastic body) and a collector 2r (particularly, cathode collector) between an electrode and the partition wall 1, thereby supporting elastic body 2e with the collector 2r.

Specifically, each electrode compartment includes an electrolyte inlet 5i for introducing the electrolyte to the electrode compartment, and an electrolyte outlet 5o for discharging the electrolyte from the electrode compartment, on the surface of the outer frame on the partition wall side (FIG. 4A). More specifically, each anode compartment is provided with an anode electrolyte inlet 5i for introducing the electrolyte to the anode compartment, and an anode electrolyte outlet 5o for discharging the electrolyte from the anode compartment. Each cathode compartment is provided with a cathode electrolyte inlet 5i for introducing the electrolyte to the cathode compartment, and a cathode electrolyte outlet 5o for discharging the electrolyte from the cathode compartment.

In the example in FIGS. 3 and 4A-C, the rectangular partition wall 1 and the rectangular membrane 4 are arranged so as to be parallel to each other, and the surface of the outer frame 3 on the partition wall 1 side is vertical to the partition wall 1. Therefore, each electrode compartment has a rectangular parallelepiped shape.

The bipolar electrolyzer 50 typically has header pipes 10 for dispensing or collecting an electrolyte, including an anode inlet header 10ai for introducing the electrolyte to an anode compartment and a cathode inlet header 10ci for introducing the electrolyte to a cathode compartment, at a lower portion of the outer frame 3 at the edge of the partition wall 1. Similarly, the bipolar electrolyzer 50 also has an anode outlet header 10ao for discharging the electrolyte from the anode compartment and a cathode outlet header 10co for discharging the electrolyte from the cathode compartment, at an upper portion of the outer frame 3 at the edge of the partition wall 1. (FIG. 3).

A header attached to the bipolar element is typically disposed as an internal header (FIG. 3) or an external header, and either type may be used.

In the bipolar electrolyzer 50 of the present embodiment, the electrolyte dispensed via the anode inlet header 10ai enters the anode compartment through the anode electrolyte inlet 5i, passes through the anode compartment, is discharged from the anode compartment through the anode electrolyte outlet 5o, and is collected in the anode outlet header 10ao.

Particularly, in the example in FIG. 3, the multiple ribs 6 are provided in the direction orthogonal to the given direction along the partition wall 1 at regular interval (pitch).

In addition, in the bipolar element of an example, each rib has the length that is almost the same as the height of the electrode compartment (height in the electrolyte passage direction), and are provided so as to be vertical to the partition wall.

The ribs may be provided with, but are not limited to, through-holes for the purpose of reducing the weight of the electrolyzer, for example.

### - Membrane -

As the membrane 4 used in the bipolar electrolyzer 50 according to the present embodiment, an ion permeable membrane is used in order to isolate the generated hydrogen gas and oxygen gas while conducting ions. For this ion permeable membrane, it is possible to use an ion exchange membrane having ion exchange ability and a porous membrane capable of permeating the electrolyte. The ion permeable membrane preferably has low gas permeability, high ionic conductivity, low electronic conductivity, and high strength.

The porous membrane has a plurality of fine through-holes, and may be, for example, a polymeric porous membrane, an inorganic porous membrane, a woven fabric, or a nonwoven fabric. These may be prepared with known techniques. Asbestos porous membranes were widely used in the past, but their effects on human health were concerned and organic membranes have been developed and used.

A preferred example of the porous membrane contains a polymer material and hydrophilic inorganic particles, and the hydrophilic inorganic particles provide hydrophilicity to the porous membranes.

### ((Zero gap structure))

In each bipolar element 60 in a zero-gap electrolysis cell 65, as a means for reducing the distance between the electrodes, it is preferable to dispose a spring, which is an elastic body 2e, between an electrode 2 and the corresponding partition wall to support the electrode 2 with the spring. For instance, in a first example, a spring made of a conductive material is attached to the partition wall 1, and the electrode 2 may be attached to the spring. In a second example, a spring is attached to an electrode the ribs 6 attached to the partition wall 1, and the electrode 2 may be attached to the spring. In the case of adopting such a configuration using an elastic body 2e, it is necessary to appropriately adjust the strength of the spring, the number of springs, the shape, and the like, as necessary, so as not to introduce non-uniformity in the pressure of the electrode 2 against the membrane 4.

In the electrolysis cell 65, multiple bipolar elements each having an anode 2a and a cathode 2c are overlapped one another with a membrane 4 interposed therebetween, such that a cathode 2c in one bipolar element and an anode 2a in an adjacent bipolar element face to each other. In the electrolysis cell 65, as illustrated in FIGS. 2 to 4A-C, a partition wall 1, an outer frame 3, and a membrane 4 define an electrode compartment that allows passage of the electrolyte.

In the bipolar electrolyzer 50 of the present embodiment, as illustrated in FIG. 2, the membrane 4 is in contact with the anode 2a and the cathode 2c so as to form a zero-gap structure Z.

In particular in the present embodiment, in the bipolar electrolyzer 50, a portion between the partition walls 1 of two adjacent bipolar elements 60 and a portion between the partition walls 1 of each terminal element and of the adjacent the bipolar element 60 are respectively referred to as an electrolytic cell 65. Each electrolytic cell 65 includes a partition wall 1, an anode compartment, and an anode 2a of one element; a membrane 4; and a cathode 2c, a cathode compartment, and a partition wall 1 of another element.

Further, by strengthening the rigidity of the other electrode paired with the electrode supported via the elastic body (for example, by making the rigidity of the anode stronger than the rigidity of the cathode), the other electrode is structured to have less deformation even when pressed. On the other hand, the electrode supported via the elastic body has a flexible structure capable of deforming when pressed upon the membrane such that irregularities due to fabrication accuracy of the electrolyzer, deformation of the electrode, and the like can be absorbed, and a zero-gap structure can be maintained.

More specifically, a three-layered structure may be formed in which a current collector is attached to an end of the ribs (flow rectifiers) electrically contacting the partition wall, and a conductive elastic body is attached to the upper side of the current collectors, i.e., the side opposite to the partition wall; and an electrode is overlapped on the upper side, i.e., the membrane side adjacent to the conductive elastic body.

In the bipolar electrolyzer according to the present embodiment, as illustrated in FIG. 2, it is preferable that a conductive elastic body 2e and a cathode current collector 2r are interposed between the cathode 2c and the partition 1 such that the conductive elastic body 2e is sandwiched between the cathode 2c and the cathode current collector 2r. Further, it is preferable that the cathode current collector 2r is in contact with the ribs 6 of the cathode.

As illustrated in FIG. 2, the zero-gap structure Z of the bipolar electrolyzer according to the present embodiment is preferably configured such that bipolar elements are overlapped one another having a membrane 4 interposed therebetween, in which anode ribs 6 and an anode 2a are stacked in this order on the anode side of the partition wall 1; and cathode ribs 6, a cathode current collector 2r, a conductive elastic body 2e, and a cathode 2c are stacked in this order on the cathode side, and the membrane 4 is in contact with the anode 2a and the cathode 2c.

The electrode for constructing the zero-gap structure Z is preferably attached to the conductive elastic body by spot welding, or fixation by means of metal or plastic pins, or pressing pressure of the resilience force of the conductive elastic body.

The form of the other electrode paired with the electrode supported by the elastic body is also important. In the zero-gap configuration described above, a membrane is pressed against electrodes stronger than membranes in conventional electrolyzer. For example, in an electrode utilizing an expanded metal substrate, a membrane may be damaged at edged of openings, or the membrane may enter into openings thereby providing a gap between a cathode and the membrane, which results in an increased voltage.

In general, this electrode preferably has a thickness of about 0.7 mm to about 3 mm. If this thickness is too small, the electrode may deform due to the pressure difference between the anode compartment and the cathode compartment or the pressing pressure. As a result, ends of the electrode may be displaced, which may increase the inter-electrode distance, causing an increased voltage.

### - Electrode compartment -

In the bipolar electrolyzer 50 in the present embodiments, the partition walls 1, the outer frames 3, and the membrane 4 define electrode compartments through which the electrolyte passes. In this case, across the partition wall 1, one electrode compartment on the anode side is an anode compartment, and the other on the cathode side is a cathode compartment.

### - Gasket -

In the bipolar electrolyzer 50 according to the present embodiment, as illustrated in FIG. 2, it is preferable that a gasket 7 is sandwiched between the outer frames 3 bordering the partition walls 1 together with the membrane 4. The gasket is used for providing a seal against the electrolyte and generated gases between the bipolar element 60 and the membrane 4 and between the bipolar elements 60, and to prevent leakage of the electrolyte and the generated gases to the outside of the electrolyzer and intermixing of the gases between the electrode compartments.

### - Header -

The bipolar electrolyzer 50 preferably comprises a cathode compartment and an anode compartment for each electrolytic cell 65.

In order to conduct the electrolysis reaction continuously in the bipolar electrolyzer according to the present embodiment, it is necessary to continuously supply an electrolyte that contains sufficient amounts of the raw materials to be consumed by electrolysis into the cathode compartment and the anode compartment of each electrolysis cell.

The electrolytic cell is connected to an electrolyte supply/discharge plumbing system, called a header, shared by a plurality of electrolytic cells. In general, the anode distribution pipe is called as an anode inlet header, the cathode distribution pipe as a cathode inlet header, the anode collection pipe as an anode outlet header, and the cathode collection pipe as a cathode outlet header. Each electrolysis cell is connected to the corresponding electrolyte distribution pipe and the corresponding electrolyte collection pipe through a hose or the like.

In the present embodiment, the range of the electrode compartment may vary according to the detail of the structure of the outer frame to be provided at the outer end of the partition wall, and the detail of the structure of the outer frame may vary depending on the manner how to attach the headers (tubes for dispensing or collecting the electrolyte) to the outer frame. The headers attached to the bipolar electrolyzer are typically disposed as internal headers or external headers.

### - Internal header -

Internal header type refers to a type in which a bipolar electrolyzer and a header (a pipe for distributing or collecting an electrolyte) are integrated.

In a bipolar electrolyzer in the inner header type, more specifically, an anode inlet header 10ai and a cathode inlet header 10ci are provided at a lower portion inside the partition wall 1 and/or the outer frame 3 so as to extend in the direction orthogonal to the partition wall 1. In addition, an anode outlet header 10ao and a cathode outlet header 10co are provided at an upper portion inside the partition wall 1 and/or the outer frame 3 so as to extend in the direction orthogonal to the partition wall 1.

The anode inlet header, the cathode inlet header, the anode outlet header, and the cathode outlet header that are internally provided in the inner header type bipolar electrolyzer are collectively referred to as the "inner headers".

In the example of the inner header 10i type illustrated in FIG. 2, the anode inlet header 10ai and the cathode inlet header 10ci are provided at a part of a lower portion of the outer frame 3 at the edge of the partition wall 1. Similarly, the anode outlet header 10ao and the cathode outlet header 10co are provided at a part of an upper portion of the outer frame 3 at the edge of the partition wall 1. The outer frame 3 is connected to the anode compartments or the cathode compartments, via respective electrolyte inlets 5i or electrolyte outlets 5o that allow passage of the electrolyte.

### - External header -

The external header type refers to a type in which a bipolar electrolyzer and a header (a pipe through which an electrolyte is distributed or collected) are independent.

In a bipolar electrolyzer of external header type, an anode inlet header and a cathode inlet header are independently provided so as to run in parallel to the electrolyzer in a direction perpendicular to the current-carrying surface of the electrolyzer. The anode inlet header and the cathode inlet header are connected to respective bipolar elements by a hose.

It is noted that the bipolar electrolyzer of inner header type or outer header type may contain a gas-liquid separation box for separating the gas generated by electrolysis from the electrolyte. The attachment position of the gas-liquid separation box is not particularly limited, yet it may be installed between the anode compartment and the anode outlet header, or between the cathode compartment and the cathode outlet header.

The bipolar element and the bipolar electrolyzer of the present embodiment can be suitably used for alkaline water electrolysis.

A bipolar electrolyzer of the present embodiment can be used for an electrolysis device for alkaline water electrolysis, for example. Examples of the electrolysis device for alkaline water electrolysis include a device comprising the bipolar electrolyzer of the present embodiment, a tubing pump to circulate the electrolyte, a gas-liquid separation tank to separate the electrolyte from hydrogen and/or from oxygen, and a water replenisher to replenish water consumed by electrolysis.

The electrolysis device for alkaline water electrolysis may further comprise other components such as a rectifier, an oxygen concentration meter, a hydrogen concentration meter, flow meters, pressure gauges, a heat exchanger, and pressure control valves.

### (Hydrogen production method)

A hydrogen production method of the present embodiment is a method for producing hydrogen by electrolyzing water containing an alkali in an electrolyzer comprising a plurality of bipolar elements of the present embodiment overlapped one another having a membrane interposed therebetween.

Examples of the bipolar elements, the membrane, and the electrolyzer include those described above.

Although the bipolar element and the bipolar electrolyzer of embodiments of the present disclosure have been descried with reference to the drawings, they are not limited to the above examples and the above-described embodiments may be modified as appropriate.

### EXAMPLES

Although the present disclosure will be described hereinafter in more detail with reference to Examples in the following, the present disclosure is by no means limited to Examples given below.

### (Example 1)

A bipolar element was fabricated as follows. Some of parts used to fabricate the electrolysis device will also be described.

### - Anode -

A substrate having granulated products of nickel oxide sprayed onto both surfaces thereof by a plasma spraying method was used. As a substrate, a nickel expanded-type substrate that had been subjected to blasting was used. The thickness of the substrate was 1 mm and the aperture ratio was 54%.

The anode had a dimension of 500 mm × 500 mm in plan view, and a thickness of 1 mm.

### - Cathode -

As a substrate, a plain weave mesh-type substrate of nickel thin wires of a diameter of 0.15 mm woven into #40 mesh and coated with platinum was used as the electrode.

The cathode had a dimension of 500 mm × 500 mm in plan view.

### - Elastic body and current collector -

As the elastic body, a woven metal fabric of nickel wires having a wire diameter of 0.15 mm corrugated so as to have a corrugation height of 5 mm, was used. The material used was nickel from the perspectives of the conductivity and the alkali resistance. The thickness was 5 mm, the repulsive force at 50% compressive deformation was 150 g/cm², and the mesh opening was about 5 mesh.

As the current collector, a nickel expanded-type substrate was used (which had a thickness of 1.2 mm, the horizontal length of an opening of 8 mm, and the vertical length of an opening of 5 mm).

The elastic body was secured by spot-welding on the current collector. Elements could be used to form a zero-gap structure, by pressing a cathode in a three-layer structure of the cathode, an elastic body, and a current collector in a bipolar element against an anode in an adjacent bipolar element, interposing a membrane therebetween.

### - Membrane -

A porous membrane was used which had a polyphenylene sulfide mesh was as a substrate and zirconium oxide dispersed in the polysulfone matrix.

The average pore diameter of this porous membrane was 0.3 µm in terms of average pore diameter for water permeation at 90°C. The thickness was 580 µm, and the porosity was 43%.

The tensile breaking strengths and the tear strengths in the machine direction (MD) and the transverse direction (TD) of the porous membrane were 98 N and 97 N, and 45N and 43N, respectively.

### - Bipolar element -

As a bipolar element, a member made of nickel was used in which a partition wall separating an anode from a cathode and an outer frame surrounding the partition wall were united. The partition wall had a dimension of 504 mm × 504 mm as the inner dimension of the outer frame in plan view, and a thickness of 2 mm.

Ribs each having a height of 25 mm and a thickness of 1.5 mm and made of nickel were welded on the partition wall on the anode side, and ribs each having a height of 25 mm and a thickness of 1.5 mm and made of nickel were welded on the partition wall on the cathode side.

The cathode ribs 6, a cathode current collector 2r, the elastic body 2e, and the cathode 2c were stacked on the partition wall 1 in this order, on the cathode side. Then, an anode rib 6 and the anode 2a were stacked on the partition wall 1 in this order, on the anode side. An outer frame bordering the partition wall was provided, thereby fabricating an inner header type bipolar element having inlet headers (10ai and 10ci) and outlet headers (10ao and 10co) at the outer frame (FIGS. 3 and 4).

The ribs were provided such that the ribs extended along one pair of side (the sides orthogonal to the side provided with the inlet headers 10ai and lOci and the sides orthogonal to the side provided with the outlet headers 10ao and 10co in FIG. 3; the sides along the A-A direction in FIG. 3; in the length direction of the partition wall) of two pairs of sides facing each other of the cathode and the anode each having a length of 50 cm and a width of 50 cm, and were substantially vertical to the partition wall and the electrodes (FIGS. 3 and 4). The anode side ribs and the cathode side ribs were provided such that they extended in the same direction. Four ribs were provided over the width of 500 mm. Specifically, two ends ribs were provided 62.5 mm spaced apart from the respective ends, and two ribs were provided between the end ribs at regular intervals (at intervals of 125 mm). The ribs used each had a thickness of 1.5 mm. The above-described locations of the ribs were locations with respect to the centers of the ribs in the thickness direction of the ribs.

When viewed from the direction orthogonal to the partition wall, this zero-gap bipolar element had a rectangular shape having a length of 540 mm and a width of 620 mm.

### - Electrode compartment -

The lengths of the electrode compartments in the direction orthogonal to the partition wall (depths of the electrode compartments) were 25 mm in the anode compartments and the cathode compartments.

A cathode and an anode were stacked interposing a gasket having a membrane and then were pressed against the membrane from the surfaces of the cathode and the anode such that the cathode and the anode were brought into contact with the membrane, thereby defining a zero-gap structure.

### - Geometry of anode -

Bent structures were provided to the anode in the resultant bipolar element as follows.

FIG. 4B is a cross-section (transverse cross-section) on a plane in the width direction of the partition wall, which is vertical to a flat part of the partition wall 1 sandwiched between the anode 2a and the cathode 2c, and is vertical to the length direction of the partition wall.

The anode 2a was provided with a first bent structure 2a5 flexing toward the partition wall at an intersection location of the anode 2a and the end rib 61 (the outer angle defined by the two crossing lines extending from the surface of the first bent structure was about 178°), and a second bent structure 2a4 flexing toward the partition wall and spaced apart by 3 mm from the anode edge (the outer angle defined by the two crossing lines extending from the surface of the second bent structure was about 151°), in the transverse cross-section (FIG. 4B). Regions 2a1, 2a2, and 2a3 other than the bent structures were made flat, and the clearance 'a' from anode 2a to the partition wall 1 was the longest in the region 2a3 between the first bent structure and the center region of the anode (FIG. 4B).

The difference of the clearances 'a' from the partition wall 1 to the anode 2a between the center region of the electrode where the clearance 'a' was the longest, and the second bent structure 2a4 was 1.5 mm. The difference of the clearances 'a' from anode 2a to the partition wall 1 between the center region of the electrode where the clearance 'a' was the longest, and the anode edge was 3.0 mm.

In addition, the minimum clearance 'c' from the anode edge to the outer frame in a direction vertical to the given direction along the partition wall was about 2.4 mm, in the transverse cross-section.

The above bent structures were provided across the entire sides of the anode in the length direction thereof between the two ends of the anode. The sides of the anode in the length direction thereof were made flat without any bent structures.

When the geometry of the anode in the bipolar element in Example 1 was visually observed after it was disassembled in an evaluation of the external appearance of the membrane described later, the geometry of the first bent structure did not change.

### (Example 2)

A bipolar element was fabricated in the same manner as Example 1 except that the shape of the anode was changed as follows.

### - Geometry of anode -

A bent structure was provided to the anode in the resultant bipolar element as follows.

The anode 2a was provided with a first bent structure 2a5 at an intersection of the end rib 61 and the anode 2a (the outer angle defined by the two crossing lines extending from the surface of the first bent structure was about 177°). The region other than the first bent structure was made flat, and the clearance 'a' from anode 2a to the partition wall 1 was the longest in the region 2a3 between the first bent structure and the center region of the anode.

No second bent structure was provided in this Example.

The difference of the clearances 'a' from anode 2a to the partition wall 1 between the center region of the electrode where the clearance 'a' was the longest, and the anode edge was 3.0 mm.

In addition, the minimum clearance 'c' from the anode edge to the outer frame in a direction vertical to the given direction along the partition wall was about 2.1 mm, in the transverse cross-section.

The above bent structure was provided across the entire sides of the anode in the length direction thereof between the two ends of the anode. The sides of the anode in the length direction thereof were made flat without any bent structures.

When the geometry of the anode in the bipolar element in Example 2 was visually observed after it was disassembled in an evaluation of the external appearance of the membrane described later, the geometry of the first bent structure did not change.

### (Example 3)

A bipolar element was fabricated in the same manner as Example 1 except that the shape of the anode was changed as follows.

### - Geometry of anode -

Bent structures were provided to the anode in the resultant bipolar element as follows.

The anode 2a was provided with a first bent structure 2a5 flexing toward the partition wall at an intersection location of the anode 2a and the end rib 61 (the outer angle defined by the two crossing lines extending from the surface of the first bent structure was about 176°), and a second bent structure 2a4 flexing toward the partition wall and spaced apart by 3 mm from the anode edge (the outer angle defined by the two crossing lines extending from the surface of the second bent structure was about 142°), in the transverse cross-section (FIG. 4B). Regions 2a1, 2a2, and 2a3 other than the bent structures were made flat, and the clearance 'a' from anode 2a to the partition wall 1 was the longest in the region 2a3 between the first bent structure and the center region of the anode (FIG. 4B).

The difference of the clearances 'a' from the partition wall 1 to the anode 2a between the center region of the electrode where the clearance 'a' was the longest, and the second bent structure 2a4 was 4.0 mm. The difference of the clearances 'a' from the anode 2a to the partition wall 4 between the center region of the electrode where the clearance 'a' was the longest, and the anode edge was 6.0 mm.

In addition, the minimum clearance 'c' from the anode edge to the outer frame in a direction vertical to the given direction along the partition wall was about 2.9 mm, in the transverse cross-section.

The above bent structures were provided across the entire sides of the anode in the length direction thereof between the two ends of the anode. The sides of the anode in the length direction thereof were made flat without any bent structures.

When the geometry of the anode in the bipolar element in Example 3 was visually observed after it was disassembled in an evaluation of the external appearance of the membrane described later, the geometry of the first bent structure did not change.

### (Example 4)

A bipolar element was fabricated in the same manner as Example 1 except that the shape of the anode was changed as follows.

### - Geometry of anode -

Bent structures were provided to the anode in the resultant bipolar element as follows.

The anode 2a was provided with a first bent structure 2a5 flexing toward the partition wall at an intersection location of the anode 2a and the end rib 61 (the outer angle defined by the two crossing lines extending from the surface of the first bent structure was about 179°), and a second bent structure 2a4 flexing toward the partition wall and spaced apart by 3 mm from the anode edge (the outer angle defined by the two crossing lines extending from the surface of the second bent structure was about 171°). Regions 2a1, 2a2, and 2a3 other than the bent structures were made flat, and the clearance 'a' from anode 2a to the partition wall 1 was the longest in the region 2a3 between the first bent structure and the center region of the anode (FIG. 4B).

The difference of the clearances 'a' from the partition wall 1 to the anode 2a between the center region of the electrode where the clearance 'a' was the longest, and the second bent structure 2a4 was 1.0 mm. The difference of the clearances 'a' from the anode 2a to the partition wall 4 between the center region of the electrode where the clearance 'a' was the longest, and the anode edge was 1.5 mm.

In addition, the minimum clearance 'c' from the anode edge to the outer frame in a direction vertical to the given direction along the partition wall was about 2.1 mm, in the transverse cross-section.

The above inflection points were provided across the entire sides of the anode in the length direction thereof. The sides of the anode in the width direction thereof were made flat without any inflection points.

When the geometry of the anode in the bipolar element in Example 4 was visually observed after it was disassembled in an evaluation of the external appearance of the membrane described later, the geometry of the first bent structure did not change.

### (Example 5)

A bipolar element was fabricated in the same manner as Example 1 except that the shape of the anode was changed as follows.

### - Geometry of anode -

Bent structures were provided to the anode in the resultant bipolar element as follows.

The anode 2a was provided with a first bent structure 2a5 flexing toward the partition wall at an intersection location of the anode 2a and the end rib 61 (the outer angle defined by the two crossing lines extending from the surface of the first bent structure was about 179°), and a second bent structure 2a4 flexing toward the partition wall and spaced apart by 3 mm from the anode edge (the outer angle defined by the two crossing lines extending from the surface of the second bent structure was about 124°), in the transverse cross-section (FIG. 4B). Regions 2a1, 2a2, and 2a3 other than the bent structures were made flat, and the clearance 'a' from anode 2a to the partition wall 1 was the longest in the region 2a3 between the first bent structure and the center region of the anode (FIG. 4B).

The difference of the clearances 'a' from the partition wall 1 to the anode 2a between the center region of the electrode where the clearance 'a' was the longest, and the second bent structure 2a4 was 0.5 mm. The difference of the clearances 'a' from the anode 2a to the partition wall 1 between the center region of the electrode where the clearance 'a' was the longest, and the anode edge was 3.0 mm.

In addition, the minimum clearance 'c' from the anode edge to the outer frame in a direction vertical to the given direction along the partition wall was about 3.3 mm, in the transverse cross-section.

The above bent structures were provided across the entire sides of the anode in the length direction thereof between the two ends of the anode. The sides of the anode in the length direction thereof were made flat without any bent structures.

In addition, when the geometry of the anode in the bipolar element in Example 5 was visually observed after it was disassembled in an evaluation of the external appearance of the membrane described later, the difference of the clearances 'a' from the anode 2a to the partition wall 1 between the center region of the electrode where the clearance 'a' was the longest and the second bent structure 2a4 in the anode became 2.0 mm.

### (Example 6)

A bipolar element was fabricated in the same manner as Example 1 except that the shape of the anode was changed as follows.

### - Geometry of anode -

A bent structure was provided to the anode in the resultant bipolar element as follows.

The anode 2a is provided with a second bent structure 2a4 flexing toward the partition wall and spaced apart by 3 mm from the anode edge (the outer angle defined by the two crossing lines extending from the surface of the second bent structure was about 123°). The region other than the second bent structure was made flat, and the clearance 'a' from anode 2a to the partition wall 1 was the longest in the region between the second bent structure and the center region of the anode (FIG. 4B).

The difference of the clearances 'a' from anode 2a to the partition wall 1 between the center region of the electrode where the clearance 'a' was the longest, and the anode edge was 2.5 mm.

In addition, the minimum clearance 'c' from the anode edge to the outer frame in a direction vertical to the given direction along the partition wall was about 3.3 mm, in the transverse cross-section.

The above inflection points were provided across the entire sides of the anode in the length direction thereof. The sides of the anode in the width direction thereof were made flat without any inflection points.

In addition, when the geometry of the anode in the bipolar element in Example 6 was visually observed after it was disassembled in an evaluation of the external appearance of the membrane described later, a bent structure flexing toward the partition wall was formed at the intersection location of the anode 2a and the end rib 61 and the difference of the clearances 'a' from anode 2a to the partition wall 1 between the center region of the electrode where the clearance 'a' was the longest and the second bent structure 2a4 in the anode became 2.0 mm.

### (Comparative Example 1)

A bipolar element was fabricated in the same manner as Example 1 except that the shape of the anode was changed as follows.

### - Geometry of anode -

The entire anode 2a in the resultant bipolar element was made flat, without providing any bent structures.

In addition, the minimum clearance 'c' from the anode edge to the outer frame in a direction vertical to the given direction along the partition wall was about 2.0 mm, in the transverse cross-section.

In addition, when the geometry of the anode in the bipolar element in Comparative Example 1 was visually observed after it was disassembled in an evaluation of the external appearance of the membrane described later, a bent structure flexing toward the partition wall was formed at the intersection location of the anode 2a and the end rib 61 and the difference of the clearances 'a' from anode 2a to the partition wall 1 between the center region of the electrode where the clearance 'a' was the longest, and the anode edge was 2.0 mm.

### (Comparative Example 2)

A bipolar element was fabricated in the same manner as Example 1 except that the shape of the anode was changed as follows.

### - Geometry of anode -

Bent structures were provided to the anode in the resultant bipolar element as follows.

The anode 2a was provided with a first bent structure 2a5 flexing toward the partition wall at an intersection location of the anode 2a and the end rib 61 (the outer angle defined by the two crossing lines extending from the surface of the first bent structure was about 175°), and a second bent structure 2a4 flexing toward the partition wall and spaced apart by 3 mm from the anode edge (the outer angle defined by the two crossing lines extending from the surface of the second bent structure was about 143°), in the transverse cross-section. Regions 2a1, 2a2, and 2a3 other than the bent structures were made flat, and the clearance 'a' from anode 2a to the partition wall 1 was the longest in the region 2a3 between the first bent structure and the center region of the anode (FIG. 4B).

The difference of the clearances 'a' from the partition wall 1 to the anode 2a between the center region of the electrode where the clearance 'a' was the longest, and the second bent structure 2a4 was 5.0 mm. The difference of the clearances 'a' from the anode 2a to the partition wall 4 between the center region of the electrode where the clearance 'a' was the longest, and the anode edge was 7.0 mm.

In addition, the minimum clearance 'c' from the anode edge to the outer frame in a direction vertical to the given direction along the partition wall was about 3.0 mm, in the transverse cross-section.

When the geometry of the anode in the bipolar element in Comparative Example 2 was visually observed after it was disassembled in an evaluation of the external appearance of the membrane described later, the geometry of the first bent structure did not change.

### (Comparative Example 3)

A bipolar element was fabricated in the same manner as Example 1 except that the shape of the anode was changed as follows.

### - Geometry of anode -

A bent structure was provided to the anode in the resultant bipolar element as follows.

The anode 2a was provided with a second bent structure 2a4 flexing toward the partition wall and spaced apart by 3 mm from the anode edge (the outer angle defined by the two crossing lines extending from the surface of the second bent structure was 170°), in the transverse cross-section. The region other than the second bent structure was made flat, and the clearance 'a' from anode 2a to the partition wall 1 was the longest in the region between the second bent structure and the center region of the anode (FIG. 4B).

The difference of the clearances 'a' from anode 2a to the partition wall 1 between the center region of the electrode where the clearance 'a' was the longest, and the anode edge was 0.5 mm.

In addition, the minimum clearance 'c' from the anode edge to the outer frame in a direction vertical to the given direction along the partition wall was about 2.0 mm, in the transverse cross-section.

In addition, when the geometry of the anode in the bipolar element in Comparative Example 3 was visually observed after it was disassembled in an evaluation of the external appearance of the membrane described later, a bent structure flexing toward the partition wall was formed at the intersection location of the anode 2a and the end rib 61 and the difference of the clearances 'a' from anode 2a to the partition wall 1 between the center region of the electrode where the clearance 'a' was the longest, and the anode edge was 2.0 mm.

### [Evaluations]

### (Pair voltage)

### - Energizing condition 1 -

The membrane described above was interposed between an anode terminal element and the cathode in each bipolar element obtained in Examples and Comparative Examples. Further, four bipolar elements were arranged in series such that an anode and a cathode in adjacent bipolar elements faced to each other, and respective three membranes were interposed between adjacent bipolar elements. One membrane was further interposed between the anode side end of the 4^{th} bipolar element and the cathode terminal element. Gaskets were adhered to a metal frame interposing the metal frame. The metal frame was interposed between adjacent elements. A fast head, an insulation plate, and the anode terminal unit were arranged in this order on one end. An anode-side gasket part, a membrane, a cathode side gasket part, and bipolar elements were arranged in this order. Then, an anode-side gasket part, a membrane, and a cathode side gasket part were arranged, and a cathode terminal unit, an insulation plate, and a loose head were arranged on the other end. Then, the structure was tightened together from the two surfaces of fast head and loose head at a pressure of 2450 kN/m² on the seal surfaces of the gasket, thereby fabricating a bipolar electrolyzer (FIG. 1).

In the bipolar electrolyzer, the membrane was in contact with the anode and the cathode to form a zero-gap structure (FIG. 2).

The gaskets used had a quadrangular shape with a thickness of 4.0 mm, a width of 18 mm, and an inner size of 504 mm square, having an opening having the same size as the electrode compartment in plan view, and having a slit structure for holding by receiving the membrane in. In the slit structure, a gap of 0.4 mm was provided at the center in the thickness direction of the inner wall of the opening to hold the partition wall by inserting the partition wall therethrough. This gasket was made of EPDM rubber and had an elastic modulus at 100% deformation of 4.0 MPa.

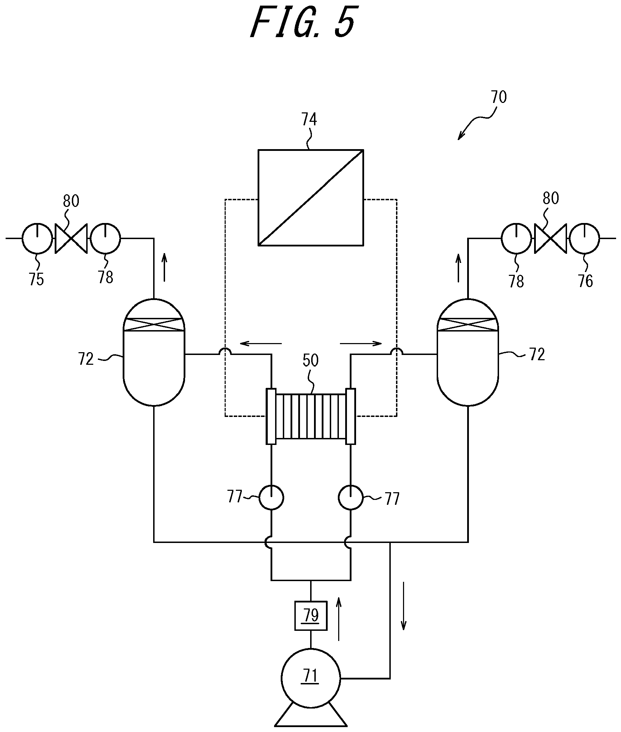

Using the bipolar elements as described above, an electrolysis device illustrated in FIG. 5 was fabricated.

Each electrolysis device comprised a bipolar electrolyzer 50, a tubing pump 71 for circulating the electrolyte, and gas-liquid separation tanks 72 for separating the electrolyte from hydrogen and/or oxygen. A 30% KOH aqueous solution was sealed as the electrolyte in each gas-liquid separation tank 72 and in the bipolar electrolyzer 50. The electrolyte was caused by the tubing pump 71 to circulate through the anode compartments of the bipolar electrolyzer 50, the gas-liquid separation tank 72 for anode, and the anode compartments, and through the cathode compartments of the bipolar electrolyzer 50, the gas-liquid separation tank 72 for cathode, and the cathode compartments. The flow rate was adjusted to 200 L/min, and the temperature to 90°C.

FIG. 3 schematically illustrates the direction of flow of the electrolyte in an electrolysis device in an inner header type bipolar electrolyzer used for measuring the cell voltage. As illustrated in FIG. 3, when the bipolar element is viewed in plan view, the electrolyte was made to flow in the direction from the inlet headers to the outlet headers in the vicinities of the anode and the cathode. On the cross-section of the bipolar electrolyzer, the electrolyte was made to flow in the direction along the partition wall (FIG. 4A).

Since electrolysis produces hydrogen gas in the cathode compartment and oxygen gas in the anode compartment, there are formed a mixed-phase flow of the electrolyte and the hydrogen gas in the cathode outlet header (lOco) and a mixed-phase flow of the electrolyte and the oxygen gas in the anode the outlet header (10ao).

In the electrolysis device, the gas separated in each gas-liquid separation tank 72 was recovered through a pressure gauge 78, a pressure control valve 80, an oxygen concentration meter 75, or a hydrogen concentration meter 76. In addition, electric power could be controlled by the rectifier 74. In addition, flow meters 77 and a heat exchanger 79 were provided in the passage of the circulating electrolyte. Arrows in FIG. 5 indicate directions in which the circulating liquid (electrolyte) and the gas flowed.

A current was supplied to from the rectifier 74 to the bipolar electrolyzer 50 at the current densities of 6 kA/m² on the areas of the cathode and the anode. The electrode surface (current-carrying surface) was 500 mm × 500 mm, and hence a current of 1.5 kA was provided.

The pressure in the electrolyzer after the start of energization was measured with each pressure gauge 78 and adjusted so that the cathode-side pressure was 50 kPa and the oxygen-side pressure was 49 kPa. The pressure adjustment was carried out by installing a control valve 80 downstream of each pressure gauge 78.

The pair voltage after 500 hours after the start of energization was measured.

### - Energizing condition 2 -

The pair voltage after 500 hours after the start of energization was measured under the same conditions as Energizing condition 1 except that the temperature of the electrolyte being circulated was 80°C.

### - Energizing condition 3 -

The pair voltage after 500 hours after the start of energization was measured under the same conditions as Energizing condition 1 except that membranes used to fabricate the bipolar electrolyzer was fluorine-based ion exchange membranes having a thickness of 32 µm.

The fluorine-based ion exchange membranes used were as follows.

A bipolymer of a vinyl fluoride compound having a general formula: CF₂=CF-O(CF₂CFCF₃O)-(CF₂)₂-SO₂F and a fluorinated olefin having a general formula: CF₂=CF₂ (EK: 950 and MI: 20), as a precursor for a fluorine-based ion exchange resin, was processed with a T-die into a film in 32 µm thick to obtain a precursor film. The resultant precursor film was immersed in a hydrolyzation bath (DMSO : KOH : water = 5:30:65) heated at 95°C for 1 hour to obtain a fluorine-based ion exchange membrane having metal salt ion exchange groups. After the film was sufficiently washed with water, it was immersed in a 2N hydrochloric acid bath heated at 65 °C for 15 minutes to obtain a fluorine-based ion exchange membrane having acid ion exchange groups. Then the film was sufficiently washed with water and was then dried. The dried film was released from the restriction to obtain a fluorine-based ion exchange membrane as a membrane.

### (External appearance of membrane)

Each bipolar electrolyzer was energized for 500 hours under one of the above-described Energizing conditions 1-3, and the bipolar electrolyzer was then disassembled. A visual observation was made on each membrane at and around the regions that contacted regions of the anode from the anode edge to the intersection with the end rib, to determine whether or not there were any contact mark and/or flaws on the surface of the membrane.

The "flaws" as used herein included creases and steps higher than 1 mm, and the sizes of such creases and/or steps, if present, were measured with a caliper.

Evaluation results in Examples and Comparative Examples are listed in Table 1.

| Table 1 | Table 1 | | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|---|
| Shape of anode | First bent structure | | | Yes | Yes | Yes | Yes | Yes | No | No | Yes | No |
| | Second bent structure | | | Yes | No | Yes | Yes | Yes | Yes | No | Yes | Yes |
| | Difference of clearances 'a' between center region and electrode edge | | mm | 3.0 | 3.0 | 6.0 | 1.5 | 3 | 2.5 | 0 | 7 | 0.5 |
| | Difference of clearances 'a' between center region and second bent structure | | mm | 1.5 | - | 4.0 | 1.0 | 0.5 | 0.0 | - | 5.0 | 0.0 |
| | Outer angle of two lines tangent to first bent structure | | ° | 178 | 177 | 176 | 179 | 179 | - | - | 175 | - |
| | Outer angle of two lines tangent to second bent structure | | ° | 151 | - | 142 | 171 | 124 | 123 | - | 143 | 170 |
| Minimum clearance 'c' from electrode to outer | | | mm | 2.4 | 2.1 | 2.9 | 2.1 | 3.3 | 3.3 | 2.0 | 3.0 | 2.0 |
| Evaluation | Pair voltage | Energizing condition 1 | V | 1.75 | 1.75 | 1.80 | 1.75 | 1.75 | 1.75 | 1.75 | 2.1 | 1.75 |
| | | Energizing condition 2 | V | 1.80 | - | - | - | - | - | 1.80 | - | - |
| | | Energizing condition 3 | V | 1.75 | - | - | - | - | - | - | - | - |
| | Change of first bent structure | | | No | No | No | No | Yes | Yes | Yes | No | Yes |
| | External appearance of membrane | Energizing condition 1 | - | Step 0mm, No contact mark | Step 0mm, Slight contact mark | Step 0mm, No contact mark | Step 1mm, No contact mark | Step 1mm, Slight contact mark | Step 1mm, No contact mark | Step 4mm Flaw | Step 0mm, No contact mark | Step 4mm Flaw |
| | | Energizing condition 2 | - | Step 0mm, No contact | - | - | - | - | - | Step 2mm Flaw | - | - |
| | | Energizing condition 3 | - | Step 0mm, No contact | - | - | - | - | - | - | - | - |

### INDUSTRIAL APPLICABILITY

In accordance with the bipolar element of the present disclosure, the possibility of a membrane to be flawed is reduced even after long-term use in a zero-gap structure wherein the membrane is in contact with an anode and a cathode. Therefore, a suitable application to electrolysis devices that are used for long hours, such as electrolysis devices for alkaline water electrolysis, is possible.

### REFERENCE SIGNS LIST

1 Partition wall
2 Electrode
2a Anode
2a1 Between second bent structure and anode edge
2a2 Between first bent structure and second bent structure
2a3 Between first bent structure and center region of anode (including center region of anode)
2a4 Second bent structure
2a5 First bent structure
2c Cathode
2e Elastic body
2r Current collector
3 Outer frame
4 Membrane
5i Electrolyte inlet
5o Electrolyte outlet
6 Rib
6a Anode rib
6c Cathode rib
61 End rib
62 Rib end
7 Gasket
10 Header
10i Inner header
10ai Anode inlet header
10ao Anode outlet header
lOci Cathode inlet header
10co Cathode outlet header
50 Bipolar electrolyzer
51g Fast head, loose head
51i Insulation plate
51a Anode terminal element
51c Cathode terminal element
51r Tie rod
60 Bipolar element
65 Electrolysis cell
70 Electrolysis device
71 Tubing pump
72 Gas-liquid separation tank
74 Rectifier
75 Oxygen concentration meter
76 Hydrogen concentration meter
77 Flow meter
78 Pressure gauge
79 Heat exchanger
80 Pressure control valve
D1 Given direction along partition wall
a Clearance from electrode to partition wall
c Minimum clearance from electrode edge to outer frame
Z Zero-gap structure

## Claims

1. A bipolar element comprising:
electrodes comprising a cathode and an anode;
a partition wall separating the anode from the cathode; and
an outer frame bordering the partition wall,
wherein a clearance 'a' from an electrode to the partition wall is the longest in a center region of the electrode, and a difference of the clearances 'a' between the center region of the electrode and an edge of the electrode is 1.0 mm to 6.0 mm, in cross-section on a plane that is vertical to the partition wall and is vertical to a given direction along the partition wall.

2. The bipolar element according to claim 1, wherein the electrode comprises two or more bent structures from the center region to the edge of the electrode in the cross-section, each bent structure having a center of curvature on a side of the partition wall.

3. The bipolar element according to claim 2, further comprising a plurality of ribs that are provided between the electrode and the partition wall such that the ribs are arranged so as to be parallel to the given direction along the partition wall, the plurality of ribs comprising an end rib that is located the closest to the edge of the electrode,
wherein a first bent structure of the bent structures is located at an intersection of a line vertical to the partition wall along the end rib and the electrode, and a second bent structure of the bent structures is located closer to the edge of the electrode than the intersection and is spaced apart from the edge by 15 mm or less, in the cross-section.

4. The bipolar element according to claim 3, wherein a difference of the clearances 'a' between the center region of the electrode and a center of a bent region including the second bent structure is 1.0 mm to 4.0 mm.

5. The bipolar element according to any one of claims 1-4, wherein a minimum clearance from the edge to the outer frame in a direction vertical to the given direction along the partition wall is 1 mm to 4 mm, in the cross-section.

6. The bipolar element according to any one of claims 1-5, wherein the electrode comprises a substrate containing nickel and having a thickness of 0.5 mm to 2.0 mm.

7. The bipolar element according to any one of claims 1-6, wherein the anode comprises the bent structures.

8. The bipolar element according to any one of claims 1-7, wherein
the cathode has a mesh structure,
the bipolar element further comprises:
an elastic body between the cathode and the partition wall; and
a cathode current collector between the elastic body and the cathode,
the cathode current collector comprising the ribs attached thereto.

9. A bipolar electrolyzer comprising:
a plurality of the bipolar elements according to any one of claims 1-8, overlapped one another having a membrane interposed therebetween.

10. A hydrogen production method for producing hydrogen by electrolyzing water containing an alkali in an electrolyzer comprising a plurality of bipolar elements overlapped one another having a membrane interposed therebetween, wherein each bipolar element is a bipolar element comprising electrodes comprising a cathode and an anode, a partition wall separating the anode from the cathode, and an outer frame bordering the partition wall, a clearance 'a' from an electrode to the partition wall being the longest in a center region of the electrode, and a difference of the clearances 'a' between the center region of the electrode and an edge of the electrode being 1.0 mm to 6.0 mm, in cross-section on a plane that is vertical to the partition wall and is vertical to a given direction along the partition wall.
